# FASCICULE DE BREVET EUROPEEN

(11) **EP 1 701 473 B1**
(45) Date de publication et mention de la délivrance du brevet: **30.10.2013**
(21) Numéro de dépôt: 06110951.8
(22) Date de dépôt: 10.03.2006
(51) Int. Cl.: H04L 12/24

(54) **Dispositif d'optimisation d'arbres de diagnostic d'un outil de diagnostic d'un réseau de communication**
Diagnostikgerät mit Baumdiagnostik-Optimierungseinrichtung für ein Kommunikationsnetzwerk
Diagnostic tool having a diagnostic tree optimisation device for a communication network

(30) Priorité: 11.03.2005 FR 0550641
(43) Date de publication de la demande: 13.09.2006
(73) Titulaire: Alcatel Lucent, 75007 Paris (FR)
(72) Inventeur: Delegue, Gérard, 94230 Cachan (FR); Betge-Brezetz, Stéphane, 75015 Paris (FR); Fournigault, Lionel, 91190 Gif sur Yvette (FR)
(74) Mandataire: Sciaux, Edmond

(56) Documents cités:
- EP-A- 0 413 512
- US-A- 5 539 869
- US-B1- 6 481 005
- US-B1- 6 499 117

## Description

L'invention concerne le domaine des réseaux de communication, et plus précisément l'optimisation du fonctionnement de ces réseaux.

Comme le sait l'homme de l'art, des outils de diagnostic ont été créés afin de déterminer les causes de problèmes survenant au sein des réseaux de communication, comme par exemple la baisse de la qualité de service (ou QoS).

Parmi ces outils de diagnostic, certains utilisent des arbres de diagnostic pour déterminer des causes de problèmes. Il est rappelé qu'un arbre de diagnostic est une structure constituée de noeuds associés chacun à un ou plusieurs tests de réseau et reliés entre eux par des branches représentatives de relations logiques entre tests, dites relations de causalité. Les feuilles (ou terminaisons) d'un arbre de diagnostic correspondent à des causes particulières de problème (causes explicatives de l'origine d'un problème), les noeuds pères de ces feuilles correspondent aux causes de ces causes particulières, et ainsi de suite jusqu'à ce que l'on atteigne le noeud racine de l'arbre qui correspond à une cause racine correspondant au problème racine à expliquer.

Par exemple, lorsque l'outil de diagnostic est dédié à la qualité de service, il dispose d'arbres de diagnostic associés chacun à un type de problème de qualité de service.

Pour déterminer chaque cause particulière à l'origine d'un problème (racine), on parcourt l'arbre de diagnostic, qui correspond à ce problème, en partant de son noeud racine et en allant vers un ou plusieurs de ses noeuds feuilles. Les résultats des tests définis en chaque noeud du parcours sont censés permettre de déterminer précisément chaque cause d'un problème, afin de pouvoir y remédier efficacement.

En raison de la grande complexité des réseaux, les arbres de diagnostic sont généralement très complexes et leur conception particulièrement difficile. De ce fait, les arbres de diagnostic sont rarement optimaux dès leur première utilisation dans un réseau. Les experts qui conçoivent les arbres de diagnostic doivent donc procéder régulièrement à leur optimisation afin d'en améliorer la précision et donc de permettre des actions correctives mieux appropriées.

Pour effectuer de telles optimisations les experts doivent analyser les contenus de rapports de diagnostic, délivrés par leurs outils de diagnostic, compte tenu de la connaissance qu'ils ont du fonctionnement du réseau, et comparer les résultats de ces analyses aux causes effectives de problèmes. Par ailleurs, les experts ne sachant pas quelle portion d'un arbre de diagnostic ils doivent optimiser, ils sont contraints de parcourir l'intégralité des branches de cet arbre de diagnostic.

L'optimisation repose donc intégralement sur les analyses effectuées par les experts qui peuvent ne pas disposer de l'ensemble des diagnostics réalisés et donc de l'intégralité de leurs résultats et/ou mal interprété la très grande quantité d'informations disponible. Par ailleurs, l'optimisation d'un arbre de diagnostic ne peut se faire qu'à l'initiative d'un expert. En outre, l'optimisation peut être chronophage dans la mesure où un expert ne sait pas, a priori, quelle(s) portion(s) d'arbre aménager.

Il existe certes un autre type d'outil de diagnostic reposant sur l'utilisation de réseaux Bayesiens. Il est rappelé qu'un réseau Bayesien est un arbre de causalité constitué de branches (ou liens) associé(e)s respectivement à des probabilités complémentaires et comportant des noeuds désignant des tests de base (ou élémentaires) à effectuer.

L'optimisation de ces réseaux Bayesiens peut certes se faire de façon automatique en modifiant les probabilités complémentaires associées aux différents liens en fonction de résultats validés. Mais, elle ne permet pas de modifier la structure d'un arbre de causalité, par exemple en lui ajoutant ou en supprimant un ou plusieurs noeuds.

Document US 6481005 décrit le préambule de la revendication 1.

Aucune solution connue n'apportant une entière satisfaction, l'invention a donc pour but d'améliorer la situation dans le cas des arbres de diagnostic.

Elle propose à cet effet un dispositif dédié à l'optimisation d'arbres de diagnostic pour un réseau de communication comportant un outil de diagnostic capable d'analyser des données de fonctionnement et/ou de configuration du réseau, au moyen d'arbres de diagnostic, de manière à délivrer des rapports de diagnostic décrivant des causes de problème(s) au sein du réseau.

Ce dispositif d'optimisation se caractérise par le fait qu'il comprend :
- des premiers moyens de stockage chargés de stocker certains au moins des rapports qui sont délivrés par l'outil de diagnostic, et
- des moyens de traitement chargés, d'une part, d'analyser les contenus de rapports stockés et correspondant à au moins un arbre de diagnostic choisi de manière à déterminer des informations représentatives de tendance(s) d'utilisation de noeuds et/ou de branches de l'arbre de diagnostic choisi, et d'autre part, de comparer ces informations à des règles qui décrivent des problèmes de comportement de portion(s) au moins d'arbres de diagnostic en fonction de tendances d'utilisation de noeud(s) et/ou de branche(s) des arbres de diagnostic, afin de déterminer des problèmes de comportement de l'arbre de diagnostic choisi.

Le dispositif selon l'invention peut comporter d'autres caractéristiques qui peuvent être prises séparément ou en combinaison, et notamment :
- ses règles peuvent être de type « condition/action » ;
- ses moyens de traitement peuvent être chargés de générer des messages décrivant les problèmes de comportement d'un arbre de diagnostic analysé ;
- les problèmes de comportement peuvent par exemple être déterminés parmi un noeud donné qui n'est jamais utilisé, des noeuds donnés qui ne sont jamais utilisés, un noeud donné qui présente toujours un même état, des noeuds donnés qui présentent systématiquement un même état, et au moins une cause racine qui est toujours détectée ;
- ses moyens de traitement peuvent être chargés de déterminer au moins une proposition de modification d'un arbre de diagnostic compte tenu de ses problèmes de comportement ;
   ➢ les moyens de traitement peuvent par exemple être chargés de modifier un arbre de diagnostic en fonction d'une proposition de modification qui le concerne ;
   ➢ les moyens de traitement peuvent par exemple être chargés d'intégrer les propositions de modification d'arbre de diagnostic dans les messages ;
   ➢ les propositions de modification d'un arbre de diagnostic peuvent être choisies parmi un besoin de suppression d'au moins un noeud donné, un besoin de regroupement de noeuds donnés, une trop grande sélectivité d'une relation logique entre des noeuds donnés, et une trop petite sélectivité d'une relation logique entre des noeuds donnés ;
- des seconds moyens de stockage chargés de stocker les règles ;
- ses règles peuvent par exemple être relatives à des arbres de diagnostic de cause(s) de problème(s) de service (comme par exemple la qualité de service ou QoS) ou d'infrastructure (comme par exemple la connectivité entre cellules d'un réseau GSM (gestion des « handovers » - transferts entre cellules)).

L'invention est particulièrement bien adaptée, bien que de façon non exclusive, aux réseaux de communication mobiles (ou cellulaires), comme par exemple les réseaux GSM, GPRS/EDGE et UMTS, et aux réseaux locaux sans fil, par exemple de type WiMAX.

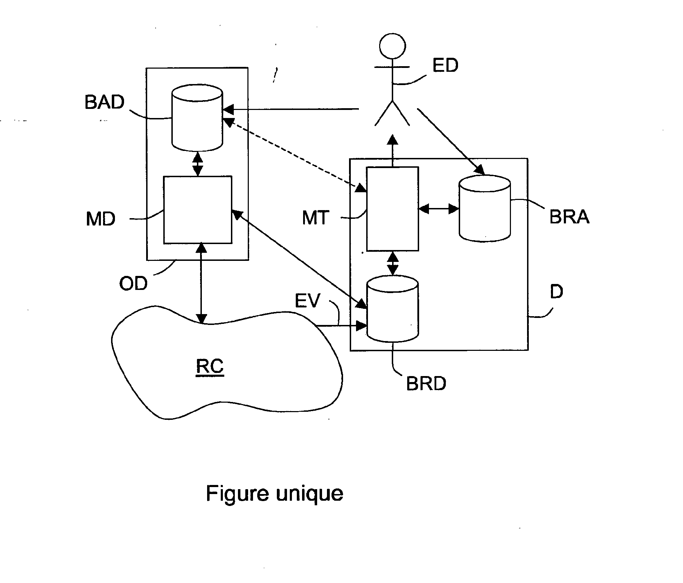

D'autres caractéristiques et avantages de l'invention apparaîtront à l'examen de la description détaillée ci-après, et du dessin annexé, sur lequel l'unique figure illustre de façon très schématique un exemple de dispositif d'optimisation d'arbres de diagnostic selon l'invention, couplé à un outil de diagnostic. Le dessin annexé pourra non seulement servir à compléter l'invention, mais aussi contribuer à sa définition, le cas échéant.

L'invention a pour objet de permettre la détermination automatisée d'optimisations d'arbres de diagnostic utilisés par un outil de diagnostic chargé de déterminer les causes de problèmes survenant au sein d'un réseau de communication.

Dans ce qui suit, on considère à titre d'exemple non limitatif que le réseau de communication, objet des diagnostics, est un réseau mobile, comme par exemple un réseau GSM, ou GPRS/EDGE, ou encore UMTS. Mais, l'invention n'est pas limitée à ce type de réseau. Elle concerne en effet tous les types de réseau de communication dont les données de fonctionnement et/ou de configuration peuvent faire l'objet de diagnostics au moyen d'arbres de diagnostic, et notamment les réseaux locaux sans fil de type WiMAX.

Par ailleurs, on considère dans ce qui suit, à titre d'exemple non limitatif, que l'outil de diagnostic est dédié à la qualité de service, et que de ce fait il dispose d'arbres de diagnostic associés chacun à un type de problème de qualité de service (ou QoS). Mais, l'invention n'est pas limitée à ce seul type de diagnostic. Elle concerne en effet tous les types de diagnostic pouvant être effectués au sein d'un réseau, et notamment les diagnostics relatifs au service (comme par exemple la qualité de service ou QoS) et les diagnostics relatifs à l'infrastructure du réseau (comme par exemple la connectivité entre cellules d'un réseau GSM (gestion des « handovers » - transferts entre cellules)).

On a schématiquement représenté sur l'unique figure un outil de diagnostic OD. Un tel outil OD comprend généralement une base de données BAD dans laquelle se trouvent stockées des données définissant des arbres de diagnostic.

Comme indiqué dans la partie introductive, un arbre de diagnostic comprend des noeuds qui sont chacun associés à un ou plusieurs tests de réseau et qui sont reliés entre eux (selon une relation de dépendance « père-fils ») par des branches qui représentent des relations logiques entre tests (ou relations de causalité). Les tests sont destinés à analyser des données de configuration et/ou de fonctionnement du réseau RC. Ces données peuvent être agrégées pour un équipement de réseau ou pour un ensemble d'équipements de réseau. Les noeuds feuilles (ou terminaisons) d'un arbre de diagnostic correspondent à différentes causes possibles d'un problème (racine) donné de fonctionnement ou de configuration du réseau RC. Les noeuds pères des noeuds feuilles correspondent aux causes de leurs causes, et ainsi de suite jusqu'à ce que l'on atteigne le noeud racine de l'arbre de diagnostic qui correspond à une cause racine qui est l'expression d'un problème (racine) donné.

Les données définissant les arbres de diagnostic sont fournies à la base de données BAD par un expert ED.

L'outil de diagnostic OD comprend également un module (ou moteur) de diagnostic MD chargé d'analyser les données de fonctionnement et/ou de configuration, qu'il reçoit du réseau RC, au moyen des arbres de diagnostic dont les données sont stockées dans la base de données BAD, et de délivrer des rapports de diagnostic qui décrivent des causes de problème(s) survenu(s) dans le réseau RC.

L'outil de diagnostic OD intervient soit au niveau des couches logiques de gestion de réseau ou NML (pour « Network Management Layer ») lorsqu'il est dédié à l'optimisation d'arbres de diagnostic de l'infrastructure réseau, soit au niveau des couches logiques de support de services ou OSS (pour « Operation Support System ») lorsqu'il est dédié à l'optimisation d'arbres de diagnostic de service.

L'invention propose un dispositif d'optimisation d'arbres de diagnostic D destiné à déterminer de façon automatisée des optimisations pour les arbres de diagnostic dont les données sont stockées dans la base de données BAD de l'outil de diagnostic OD.

Le dispositif D intervient également au niveau des couches logiques précitées (NML ou OSS). Il peut par exemple être physiquement implanté dans le système de gestion de services ou OSS (pour « Opération Support System »).

Ce dispositif d'optimisation d'arbres de diagnostic D comprend au moins des premiers moyens de stockage BRD et un module de traitement MT.

Les premiers moyens de stockage BRD sont chargés de stocker les contenus de certains au moins des rapports (et de préférence tous) qui sont délivrés par l'outil de diagnostic OD. Chaque rapport est stocké en correspondance de l'arbre de diagnostic qu'il concerne, ainsi que de préférence avec une information chronologique (par exemple un marquage temporel représentant sa date d'émission).

Ces premiers moyens de stockage BRD sont par exemple réalisés sous la forme d'une base de données. Mais, ils peuvent être réalisés sous n'importe quelle forme, comme par exemple sus la forme d'une simple mémoire de stockage.

Comme cela est illustré sur l'unique figure, les premiers moyens de stockage BRD peuvent éventuellement comporter une entrée auxiliaire EV permettant à l'opérateur du réseau RC de contrôler les contenus des rapports stockés, par exemple en vue de les valider ou de les invalider, afin que seuls des rapports validés puissent être exploités par le dispositif D.

Le module de traitement MT est tout d'abord chargé d'analyser les contenus de certains au moins des rapports qui sont stockés dans les premiers moyens de stockage BRD et qui correspondent à au moins un arbre de diagnostic désigné, par exemple, par l'expert ED. L'objectif est de déterminer des informations représentatives de tendance(s) d'utilisation d'un ou plusieurs noeuds et/ou d'une ou plusieurs branches de l'arbre de diagnostic désigné en confrontant entre eux les contenus de plusieurs (au moins deux) rapports qui le concernent.

Cette analyse est préférentiellement à caractère statistique. Par conséquent, plus le nombre de rapports confrontés est élevé plus l'analyse est fiable. Par ailleurs, toute méthode mathématique connue de l'homme de l'art peut être utilisée pour effectuer les analyses, et notamment les méthodes utilisant des règles d'analyse ou le « data mining » (exploitation de données).

Plusieurs types de corrélation peuvent être recherchés lors d'une analyse. Par exemple, on peut chercher si un (ou plusieurs) noeud(s) d'un arbre de diagnostic n'est (ne sont) jamais utilisé(s). On peut également chercher si un (ou plusieurs) noeud(s) d'un arbre de diagnostic présente(nt) toujours un même état (« vrai » ou « faux »). On peut également chercher si au moins une cause racine est toujours détectée. Ces exemples ne sont pas limitatifs. Tout type de corrélation relative aux noeuds utilisés et/ou aux branches parcourues d'un arbre de diagnostic peut être recherchée.

Lorsque l'analyse est à caractère statistique, chaque résultat d'analyse est associé à un pourcentage (ou une probabilité) d'occurrence.

Par exemple, un résultat d'analyse peut indiquer que dans 90% des cas le noeud n°X est utilisé (ou n'est pas utilisé). Un autre résultat d'analyse peut par exemple indiquer que dans 80% des cas les noeuds n°W, X, Y et Z sont dans leur état « vrai ». Encore un autre résultat d'analyse peut par exemple indiquer que dans 60% des cas les branches n°1, 2, 5, et 12 sont toujours utilisées ensemble. Encore un autre résultat d'analyse peut par exemple indiquer que dans 100% des cas une même cause racine est toujours détectée.

Il est important de noter qu'une analyse ne porte pas obligatoirement sur les rapports d'un unique arbre de diagnostic. Elle peut en effet porter sur les rapports de plusieurs (au moins deux) arbres de diagnostic si ces derniers présentent des noeuds rattachés entre eux.

Chaque fois que le module de traitement MT a effectué une analyse, il compare les informations fournies par cette analyse à des règles qui décrivent des problèmes de comportement de portion(s) au moins d'arbres de diagnostic en fonction de tendances d'utilisation de noeud(s) et/ou de branche(s) des arbres de diagnostic.

Cette comparaison est destinée à déterminer des problèmes de comportement de l'arbre de diagnostic analysé, pour lesquels existent des solutions (ou optimisations).

Les règles sont conçues par l'expert ED et fournies au dispositif D afin qu'il stocke les données qui les définissent, par exemple et comme illustré sur l'unique figure, dans des seconds moyens de mémorisation BRA.

Ces seconds moyens de mémorisation BRA peuvent être comme les premiers moyens de mémorisation BRD réalisés sous la forme d'une base de données. Mais, ils peuvent être réalisés sous n'importe quelle forme, comme par exemple sous la forme d'une simple mémoire de stockage. Les premiers BRD et seconds BRA moyens de mémorisation peuvent également constituer deux sous-parties d'un moyen de stockage, tel qu'une base de données d'optimisation.

Les règles sont de préférence de type « condition/action », c'est-à-dire « si une condition est satisfaite (ou remplie) alors on effectue une action ». Elles définissent ainsi chacune un comportement approprié d'une portion d'un ou plusieurs arbres de diagnostic. Par « portion » on entend ici un ou plusieurs noeuds et/ou une ou plusieurs branches d'un arbre de diagnostic. D'une manière générale les règles portent sur les branches des arbres plutôt que sur une ou plusieurs branches d'un unique arbre.

Par exemple, si des noeuds ne sont jamais utilisés, cela peut signifier que des branches ou liens de causalité sont trop sélectifs. Si des noeuds utilisés présentent toujours simultanément un état « vrai », cela peut signifier qu'ils peuvent être supprimés ou bien regroupés. Si des noeuds utilisés présentent toujours simultanément un état « faux », cela peut signifier qu'ils peuvent être regroupés ou bien que des branches ou liens de causalité ne sont pas assez sélectifs. Si des causes racine sont systématiquement détectées, cela peut signifier que des branches ou liens de causalité ne sont pas assez sélectifs.

Les analyses effectuées étant préférentiellement statistiques, les règles comportent donc une condition statistique (ou probabiliste). Une telle règle se présente par exemple sous la forme : « Si deux causes racines sont trouvées en même temps dans 50% des cas, alors le noeud antérieur où les branches divergent comporte des tests qui ne sont pas assez sélectifs » ou « si une cause racine est trouvée en même temps dans 70% des cas, alors le noeud antérieur où la branche diverge comporte des tests qui ne sont pas assez sélectifs ».

En confrontant le résultat d'une analyse aux règles, le module de traitement MT peut détecter n'importe quel problème de comportement répertorié dans lesdites règles. Il peut alors générer un message décrivant chaque problème de comportement qu'il a détecté dans un arbre de diagnostic donné, afin que l'expert puisse le solutionner.

Mais, le module de traitement MT peut être également chargé de déterminer une ou plusieurs propositions de modification d'un arbre de diagnostic compte tenu des problèmes de comportement qu'il a détecté au sein de ce dernier. En effet, il lui suffit de prendre chaque règle définissant un problème de comportement détecté pour en extraire l'action correspondante, puis d'associer à cette action la portion de l'arbre posant problème. Par exemple, lorsque dans 80% des cas les noeuds n°W, X, Y et Z sont simultanément dans leur état vrai, alors le module de traitement MT peut proposer leur regroupement en un unique noeud ou bien proposer de rendre le test du noeud de convergence plus sélectif.

D'une manière générale, les propositions de modification (ou d'optimisation) d'un arbre de diagnostic peuvent par exemple préciser qu'un ou plusieurs noeuds donnés doivent être supprimés, ou que plusieurs noeuds doivent être regroupés, ou qu'une relation logique entre des noeuds donnés est trop sélective, ou encore qu'une relation logique entre des noeuds donnés n'est pas assez sélective.

Le module de traitement MT peut également disposer de règles spécifiques complémentaires lui permettant de déterminer chaque proposition de modification (et donc d'optimisation) d'un arbre de diagnostic.

Lorsque le module de traitement MT est chargé de déterminer des propositions de modification (et donc d'optimisation) des arbres de diagnostic de l'outil D, il peut être agencé de manière à intégrer ses propositions de modification dans un message destiné à l'expert ED. On peut également et éventuellement envisager que le module de traitement MT soit chargé de modifier directement l'arbre de diagnostic concerné (dans l'outil de diagnostic OD) en fonction des propositions de modification qu'il a déterminées pour lui.

Le dispositif d'optimisation d'arbres de diagnostic D selon l'invention, et notamment son module de traitement MT ainsi qu'éventuellement ses premiers BRD et seconds BRA moyens de stockage, peuvent être réalisés sous la forme de circuits électroniques, de modules logiciels (ou informatiques), ou d'une combinaison de circuits et de logiciels.

Par ailleurs, le dispositif d'optimisation d'arbres de diagnostic D selon l'invention peut faire partie d'un outil de diagnostic OD.

L'invention ne se limite pas aux modes de réalisation de dispositif d'optimisation d'arbres de diagnostic décrits ci-avant, seulement à titre d'exemple, mais elle englobe toutes les variantes que pourra envisager l'homme de l'art dans le cadre des revendications ci-après.

## Revendications

1. Dispositif (D) d'optimisation d'arbres de diagnostic pour un réseau de communication (RC) comportant un outil de diagnostic (OD) propre à analyser des données de fonctionnement et/ou de configuration dudit réseau (RC), au moyen d'arbres de diagnostic constitués de noeuds associés chacun à un ensemble d'au moins un test de réseau et reliés entre eux par des branches représentatives de relations logiques entre tests, de manière à délivrer des rapports de diagnostic décrivant des causes de problème(s) au sein dudit réseau, **caractérisé en ce qu'**il comprend des premiers moyens de stockage (BRD) agencés pour stocker certains au moins desdits rapports délivrés par ledit outil de diagnostic, et des moyens de traitement (MT) agencés i) pour analyser les contenus de rapports stockés et correspondant à au moins un arbre de diagnostic choisi de manière à déterminer des informations représentatives de tendance(s) d'utilisation de noeuds et/ou de branches dudit arbre de diagnostic choisi, et ii) pour comparer lesdites informations à des règles décrivant des problèmes de comportement de portion(s) au moins d'arbres de diagnostic en fonction de tendances d'utilisation de noeud(s) et/ou de branche(s) desdits arbres de diagnostic, de manière à déterminer des problèmes de comportement dudit arbre de diagnostic choisi.

2. Dispositif selon la revendication 1, **caractérisé en ce que** lesdites règles sont de type « condition/action ».

3. Dispositif selon l'une des revendications 1 et 2, **caractérisé en ce que** lesdits moyens de traitement (MT) sont agencés pour générer des messages décrivant lesdits problèmes de comportement d'un arbre de diagnostic analysé.

4. Dispositif selon l'une des revendications 1 à 3, **caractérisé en ce que** lesdits problèmes de comportement sont choisis dans un groupe comprenant au moins un noeud donné jamais utilisé, des noeuds donnés jamais utilisés, un noeud donné présentant toujours un même état, des noeuds donnés présentant systématiquement un même état, et au moins une cause racine toujours détectée.

5. Dispositif selon l'une des revendications 1 à 4, **caractérisé en ce que** lesdits moyens de traitement (MT) sont agencés pour déterminer au moins une proposition de modification d'un arbre de diagnostic compte tenu de ses problèmes de comportement.

6. Dispositif selon la revendication 5, **caractérisé en ce que** lesdits moyens de traitement (MT) sont agencés pour modifier un arbre de diagnostic en fonction d'une proposition de modification le concernant.

7. Dispositif selon l'une des revendications 5 et 6 en combinaison avec la revendication 3, **caractérisé en ce que** lesdits moyens de traitement (MT) sont agencés pour intégrer lesdites propositions de modification d'arbre de diagnostic dans lesdits messages.

8. Dispositif selon l'une des revendications 5 à 7, **caractérisé en ce que** lesdites propositions de modification d'un arbre de diagnostic sont choisies dans un groupe comprenant au moins un besoin de suppression d'au moins un noeud donné, un besoin de regroupement de noeuds donnés, une trop grande sélectivité d'une relation logique entre des noeuds donnés, et une trop petite sélectivité d'une relation logique entre des noeuds donnés.

9. Dispositif selon l'une des revendications 1 à 8, **caractérisé en ce qu'**il comprend des seconds moyens de stockage (BRA) propres à stocker lesdites règles.

10. Dispositif selon l'une des revendications 1 à 9, **caractérisé en ce que** lesdites règles sont relatives à des arbres de diagnostic de cause(s) de problèmes choisis dans un groupe comprenant les problèmes de service et les problèmes d'infrastructure.

## Patentansprüche

1. Vorrichtung (D) zur Optimierung von Diagnosebäumen für ein Kommunikationsnetzwerk (RC) mit einem Diagnose-Tool (OD), welches für die Analyse von Betriebs- und/oder Konfigurationsdaten des besagten Netzwerks (RC) ausgelegt ist, anhand von aus Knoten, welche jeweils mit einem Satz von mindestens einem Netzwerktest assoziiert und über für die logischen Beziehungen zwischen den Tests repräsentative Zweige miteinander verbunden sind, gebildeten Diagnosebäumen, um Diagnoseberichte, welche Ursachen eines Problems oder von Problemen innerhalb des besagten Netzwerks beschreiben, zu erstellen, **dadurch gekennzeichnet, dass** sie erste Speichermittel (BRD), welche für das Speichern zumindest bestimmter der besagten von dem besagten Diagnose-Tool erstellten Berichte ausgelegt sind, und Verarbeitungsmittel (MT), welche dazu ausgelegt sind, i) die Inhalte der gespeicherten und mindestens einem Diagnosebaum, welcher für das Ermitteln der für die Tendenz(en) der Nutzung von Knoten und/oder Zweigen des besagten ausgewählten Diagnosebaums ausgewählt wurde, entsprechenden Berichte zu analysieren, und ii) die besagten Informationen mit Regeln, welche Verhaltensprobleme von zumindest einem Teil/Teilen von Diagnosebäumen in Abhängigkeit der Tendenzen der Nutzung eines Knotens/von Knoten und/oder eines Zweiges/von Zweigen der besagten Diagnosebäume beschreiben, zu vergleichen, um Verhaltensprobleme des besagten ausgewählten Diagnosebaums zu ermitteln, umfasst.

2. Verfahren nach Anspruch 1, **dadurch gekennzeichnet, dass** die besagten Regeln vom Typ "Zustand/Aktion" sind.

3. Verfahren nach einem der Ansprüche 1 und 2, **dadurch gekennzeichnet, dass** die besagten Verarbeitungsmittel (MT) für das Erzeugen von Nachrichten, welche die besagten Verhaltensprobleme eines analysierten Diagnosebaums beschreiben, ausgelegt sind.

4. Verfahren nach einem der Ansprüche 1 bis 3, **dadurch gekennzeichnet, dass** die besagten Verhaltensprobleme in einer Gruppe bestehend aus mindestens einem gegebenen niemals genutzten Knoten, gegebenen niemals genutzten Knoten, einem gegebenen Knoten, welcher immer einen selben Zustand aufweist, gegebenen Knoten, welche systematisch einen selben Zustand aufweisen, und mindestens einer immer erkannten Wurzelursache ausgewählt werden.

5. Verfahren nach einem der Ansprüche 1 bis 4, **dadurch gekennzeichnet, dass** die besagten Verarbeitungsmittel (MT) für das Ermitteln mindestens eines Änderungsvorschlags für einen Diagnosebaum unter Berücksichtigung dessen Verhaltensprobleme ausgelegt sind.

6. Vorrichtung nach Anspruch 5, **dadurch gekennzeichnet, dass** die besagten Verarbeitungsmittel (MT) für das Ändern eines Diagnosebaums in Abhängigkeit von einem ihn betreffenden Änderungsvorschlag ausgelegt sind.

7. Vorrichtung nach einem der Ansprüche 5 und 6 in Kombination mit Anspruch 3, **dadurch gekennzeichnet, dass** die besagten Verarbeitungsmittel (MT) für das Integrieren der besagten Änderungsvorschläge für den Diagnosebaum in die besagten Nachrichten ausgelegt sind.

8. Vorrichtung nach einem der Ansprüche 5 bis 7, **dadurch gekennzeichnet, dass** die besagten Änderungsvorschläge für einen Diagnosebaum in einer Gruppe mindestens bestehend aus einer Notwendigkeit der Entfernung mindestens eines gegebenen Knotens, einer Notwendigkeit des Zusammenlegens von gegebenen Knoten, einer zu großen Selektivität einer logischen Beziehung zwischen gegebenen Knoten und einer zu kleinen Selektivität einer logischen Beziehung zwischen gegebenen Knoten ausgewählt werden.

9. Vorrichtung nach einem der Ansprüche 1 bis 8, **dadurch gekennzeichnet, dass** sie zweite Speichermittel (BRA) umfasst, welcher für das Speichern der besagten Regeln ausgelegt sind.

10. Vorrichtung nach einem der Ansprüche 1 bis 9, **dadurch gekennzeichnet, dass** die besagten Regeln Diagnosebäume einer Problemursache/von Problemursachen, gewählt in einer Gruppe, welche die Dienstprobleme und die Infrastrukturprobleme umfasst, betreffen.

## Claims

1. A device (D) for optimizing diagnostic trees for a communication network (RC) comprising a diagnostic tool (OD) capable of analyzing operational and/or configuration data of said network (RC), by means of diagnostic trees formed of nodes each associated with a set of at least one network test and connected to one another by branches representative of logical relationships between tests, so as to issue diagnostic reports describing the causes of one or more problems within said network, **characterized in that** it comprises first means of storage (BRD) operative to store at least some of said reports issued by said diagnostic tool, and means of processing (MT) operative i) to analyze the content of the stored reports corresponding to at least one chosen diagnostic tree so as to determine information representative of one or more trends in the use of nodes and/or branches of said chosen diagnostic tree, and ii) to compare said information to rules describing behavioral problems of one or more portions at least of diagnostic trees based on trends in the use of one or more nodes and/or branches of said diagnostic trees, so as to determine behavioral problems of said chosen diagnostic tree.

2. A device according to claim 1, **characterized in that** said rules are of the type "condition/action".

3. A device according to one of the claims 1 and 2, **characterized in that** said means of processing (MT) are operative to generate messages describing said behavioral problems of an analyzed diagnostic tree.

4. A device according to one of the claims 1 to 3, **characterized in that** said behavioral problems are chosen from a group comprising at least one given node never being used, given nodes never being used, one given node always having the same state, given nodes always having the same state, and at least one root cause always being detected.

5. A device according to one of the claims 1 to 4, **characterized in that** said means of processing (MT) are operative to determine at least one proposed modification to a diagnostic tree given its behavioral problems.

6. A device according to claim 5, **characterized in that** said means of processing (MT) are operative to modify a diagnostic tree based on a proposed modification pertaining thereto.

7. A device according to one of the claims 5 and 6 in combination with claim 3, **characterized in that** said means of processing (MT) are operative to integrate said proposed modifications to the diagnostic tree into said messages.

8. A device according to one of the claims 5 to 7, **characterized in that** said proposed modifications to a diagnostic tree are chosen from a group comprising at least one need to delete at least one given node, a need to group together given nodes, a logical relationship between given nodes being too selective, and a logical relationship between given nodes being not selective enough.

9. A device according to one of the claims 1 to 8, **characterized in that** it comprises second means of storage (BRA) capable of storing said rules.

10. A device according to one of the claims 1 to 9, **characterized in that** said rules relate to diagnostic trees of one or more causes of problems chosen from a group comprising service problems and infrastructure problems.
